# EUROPÄISCHE PATENTSCHRIFT

(11) **EP 1 311 643 B1**
(45) Veröffentlichungstag und Bekanntmachung des Hinweises auf die Patenterteilung: **08.06.2005**
(21) Anmeldenummer: 01967205.4
(22) Anmeldetag: 18.07.2001
(51) Int. Cl.: C09J 7/02, A47G 27/04, B32B 27/12

(54) **SELBSTKLEBEFOLIE**
SELF-ADHESIVE FILM
FILM AUTOCOLLANT

(30) Priorität: 22.08.2000 DE 10040966
(43) Veröffentlichungstag der Anmeldung: 21.05.2003
(73) Patentinhaber: Uzin Tyro AG, 6374 Buochs (CH)
(72) Erfinder: SIEBER, Reto, CH-6019 Sigigen (CH); SIEBER, Marco, CH-6048 Horw (CH)
(74) Vertreter: Altenburg, Udo, Dipl.-Phys.
(86) Internationale Anmeldenummer: PCT/EP2001/008314
(87) Internationale Veröffentlichungsnummer: WO 2002/016523

(56) Entgegenhaltungen:
- EP-A- 0 937 761
- DE-A- 3 041 074
- DE-A- 19 835 919
- US-A- 4 920 720

## Beschreibung

Die Erfindung betrifft eine Selbstklebefolie zum Verkleben eines Fußbodenbelags auf einem Fußboden bzw. einer Treppe.

Allgemein sind bereits Selbstklebebänder bzw. -folien bekannt, welche z.T. auch für das Verkleben eines Fußbodenbelags auf einem Fußboden vorgesehen sind. Zur Verlegung von Fußbodenbelägen auf Treppen werden heute üblicherweise entweder aufzutragende Naßkleber oder Klebebänder verwendet, wobei sich jedoch enorm große Kleberrückstände beim Entfernen der Fußbodenbeläge von den Treppen ergeben.

Die deutsche Patentanmeldung 198 35 919.5-43 offenbart eine Selbstklebefolie zum Verkleben eines Fußbodenbelags auf einem Fußboden, mit einer Trägerschicht aus Kunststoffolie und einer Haftkleberbeschichtung auf den beiden Oberflächen. Die Selbstklebefolie ist mit einer Mindestbreite von 350 mm zum großflächigen Abdecken des mit dem Fußbodenbelag zu belegenden Fußbodens ausgebildet. Im Rahmen der weiteren Produktoptimierung im Hinblick auf die Verwendung einer Selbstklebefolie zum Verkleben eines Fußbodenbelags auf Treppen bzw. auf räumlich beengten, schwer zugänglichen Bereichen eines Fußbodens wurde gefunden, daß für solche Anwendungen die Mindestbreite der Selbstklebefolie gemäß der deutschen Patentanmeldung 198 35 919.5-43 nicht unter allen Umständen die bestmögliche Verarbeitbarkeit bietet.

Die EP-A-0937761 offenbart ein Teppichverlegeband, indem die Tragerschicht haftkleberverankernd ausgebildet ist.

Allgemein besteht bei Verwendung von herkömmlichen Selbstklebebändern bzw. -folien das Problem, daß es aufgrund der verwendeten Materialien für Trägerschicht und/oder Haftkleberbeschichtung mit der Zeit zu verschiedenen Veränderungen der verlegten Selbstklebebänder mit Auswirkungen auf die jeweilige Anwendung kommen kann. So kann es beispielsweise zur Migration von Haftkleber bzw. Haftkleberbestandteilen, z.B. durch die Trägerschicht kommen, was zur Veränderung der Klebeeigenschaften und somit zu einer eventuell nicht mehr möglichen rückstandsfreien Wiederablösbarkeit oder auch zu Veränderungen, z.B. Farbveränderungen, des Fußbodens führen kann. Ferner ist bekannt, daß es bei Verwendung unterschiedlicher Haftkleber der Haftkleberbeschichtung an der unteren Oberfläche bzw. der oberen Oberfläche der Trägerschicht zu Intermischung der Haftkleber der verwendeten Haftkleberbeschichtung kommen kann. Werden zwei verschiedene Haftkleber verwendet, so findet mit der Zeit Intermischung dieser Haftkleber statt; dies kann zur Folge haben, daß sich dadurch die Verklebe- und/oder Ablösungseigenschaften eines entsprechenden Selbstklebebandes bzw. - folie entsprechend unerwünscht verändern.

Des weiteren besteht allgemein bei Verwendung von herkömmlichen Selbstklebebändern bzw. -folien das Problem, daß die Haftkleberbeschichtung beim Ablösen der Selbstklebebänder vom Fußboden und/oder vom Fußbodenbelag jeweils stärker am Fußboden bzw. am Fußbodenbelag als an der Trägerschicht haften. Zwar ist somit u.U. ein Wiederablösen zumindest des Fußbodenbelags vom Fußboden möglich; ein rückstandsfreies Wiederablösen der entsprechenden Selbstklebebänder bzw. -folien ist somit jedoch noch nicht möglich.

Sollen Fußbodenbeläge mit einem Eigengewicht von über 500 g/m² Verwendung finden, tritt insbesondere bei deren Verklebung zusätzlich das Problem auf, daß solche Fußbodenbeläge unter wechselnden Temperatur- und Feuchtigkeitsbedingungen aufgrund der dadurch induzierten Tendenzen zu Dimensionsveränderungen relativ hohe Dehn- bzw. Schrumpfkräfte aufbauen. Eine zuverlässige Verklebung erfordert demnach einerseits eine hohe Klebkraft eines entsprechenden Selbstklebebandes bzw. -folie, andererseits darf dabei aber die rückstandsfreie Wiederablösbarkeit nicht beeinträchtigt werden.

Die Aufgabe der vorliegenden Erfindung besteht darin, eine Selbstklebefolie zum Verkleben eines Fußbodenbelags, insbesondere eines Teppichbodens, auf einem Fußboden bzw. einer Treppe bereitzustellen, welche die Nachteile des Standes der Technik überwindet und insbesondere eine zuverlässige Verklebung bei gleichzeitig einfacher Handhabung und Wiederablösbarkeit, insbesondere rückstandsfreie Wiederablösbarkeit zumindest vom Fußboden bzw. von der Treppe, bietet.

Die Aufgabe wird erfmdungsgemäß mit einer Selbstklebefolie gemäß Anspruch 1 gelöst. Bevorzugte Weiterbildungen der Erfindung sind in den Unteransprüchen definiert.

Die erfindungsgemäße Selbstklebefolie dient zum Verkleben eines Fußbodenbelags mit einem Eigengewicht von über 500 g/m², insbesondere eines Teppichbodens, auf einem Fußboden bzw. einer Treppe. Der Fußboden kann dabei insbesondere Parkett, Terrazzo, Steinfußboden, Estrich, Teppichboden, oder ähnliches sein. Die Selbstklebefolie weist eine Trägerschicht aus Kunststoffolie auf, welche an einer oberen, dem Fußbodenbelag zugewandten Oberfläche und an einer unteren, dem Fußboden zugewandten Oberfläche mit einer Haftkleberbeschichtung beschichtet ist. Die erfindungsgemäße Selbstklebefolie ist mit einer Mindestbreite von 150 mm zum großflächigen Abdeckendes mit dem Fußbodenbelag zu belegenden Fußbodens bzw. der Treppe ausgebildet, wobei die Trägerschicht zumindest an ihrer unteren Oberfläche derart haftkleberverankernd ausgebildet ist, daß beim Ablösen der Selbstklebefolie die Haftkleberbeschichtung der unteren Oberfläche an der Trägerschicht verbleibt, und wobei die Trägerschicht und die Haftkleberbeschichtung wasserdampfdurchlässig ausgebildet sind mit einem sd-Wert in einem Bereich von 0,2 m bis 15 m.

Die erfindungsgemäße Gestaltung der Selbstklebefolie mit einer Mindestbreite von 150 mm bietet die Möglichkeit bei großflächiger Abdeckung auch unter räumlich beengten Verhältnissen die erfindungsgemäße Selbstklebefolie besonders flexibel, einfach und sicher zu handhaben.

Es ist erfindungsgemäß besonders bevorzugt, daß beim Ablösen der erfindungsgemäßen Selbstklebefolie auch die Haftkleberbeschichtung der oberen Oberfläche an der Trägerschicht verbleibt und somit eine rückstandsfreie Wiederablösbarkeit ermöglicht wird. Dazu kann die Kunststofffolien-Trägerschicht zusätzlich auch zumindest an ihrer oberen Oberfläche haftkleberverankernd ausgebildet sein.

Die rückstandsfreie Wiederablösbarkeit der Selbstklebefolie sowohl vom Fußboden bzw. der Treppe als auch vom Fußbodenbelag ist insbesondere dann von Vorteil, wenn beispielsweise im Messebau ein Fußbodenbelag nach Abbau eines Messestandes wiederverwendet werden soll.

Damit die Verankerung der Haftkleberbeschichtung auf der Trägerschicht unter allen Umständen gewährleistet ist, kann die Kunststoffolie zumindest an ihrer unteren Oberfläche vorzugsweise koronisiert sein, sie kann weiterhin auch mit einer Primerbeschichtung versehen sein. Geeignete Primer funktionieren dabei auch als Bremsschicht (siehe weiter unten) gegen den Durchgang von Additiven und/oder Weichmachern. Generell ist es auch möglich, den Primer der Haftkleberbeschichtung zumindest einer der Oberflächen zuzumischen.

Die Selbstklebefolie kann gemäß einer bevorzugten Ausführungsform auch zumindest an der unteren Oberfläche beim Herstellungsprozeß mitextrudierten Haftvermittler zur Haftkleberverankerung aufweisen.

Erfindungsgemäß kann die haftkleberverankernde Oberfläche der Trägerschicht als Schicht ausgebildet sein und/oder die Trägerschicht selbst besteht aus haftkleberverankerndem Material.

Generell ist es möglich jede der oben beschriebenen Möglichkeiten der erfindungsgemäßen haftkleberverankemden Ausbildung zumindest der unteren Oberfläche der Selbstklebefolie für sich zu verwirklichen oder zwei oder mehrere davon miteinander zu kombinieren, wobei die haftkleberverankernde Ausbildung zusätzlich auch zumindest der oberen Oberfläche möglich ist, falls die rückstandsfreie Wiederablösbarkeit der Selbstklebefolie sowohl vom Fußboden bzw. der Treppe als auch vom Fußbodenbelag erforderlich ist.

Ferner kann die Trägerschicht bevorzugt so ausgebildet sein, daß sie zumindest einen Abschnitt als Bremsschicht gegen den Durchgang von Additiven und/oder Weichmachern aufweist. Dabei kann die Bremsschicht gemäß einer besonders bevorzugten Ausführungsform der Erfindung im wesentlichen die haftkleberverankernde Oberfläche sein. Allgemein können die Additive und/oder Weichmacher aus den verwendeten Haftklebern der Selbstklebefolie selbst oder aus eventuell verwendeten Fußböden, beispielsweise PVC, und/oder Fußbodenbelägen, herrühren.

Durch die Ausbildung der Trägerschicht mit zumindest einem Abschnitt als Bremsschicht wird die Migration und/oder das Durchdrücken solcher Additive und/oder Weichmacher vermieden, so daß es zu keiner negativen Veränderung der Eigenschaften der ursprünglich vorhandenen Haftkleberbeschichtung kommen kann. Somit ist sichergestellt, daß die erfindungsgemäße Selbstklebefolie über einen längeren Zeitraum ihre gewünschte Klebekraft beibehält und die Wiederablösbarkeit, insbesondere die rückstandsfreie Wiederablösbarkeit, nicht durch Veränderungen in den einzelnen Schichten der Selbstklebefolie verlorengeht.

Vorteilhaft ist es ferner, die Trägerschicht zumindest an ihrer unteren Oberfläche im wesentlichen eben auszubilden. Ferner ist es vorteilhaft, die Haftkleberbeschichtung zumindest an der unteren Oberfläche im wesentlichen eben auszubilden. Die im wesentlichen ebene Ausbildung zumindest der unteren Oberfläche der Trägerschicht und/oder der Haftkleberbeschichtung dient dabei der besonders zuverlässigen Verklebbarkeit der erfindungsgemäßen Selbstklebefolie, wobei durch die Vermeidung von Haftzentren, welche durch punktuell stärkere Haftung aufgrund von Unebenheiten auftreten, eine flächige Verankerung erreicht wird. Dies verbessert die Handhabbarkeit der erfindungsgemäßen Selbstklebefolie und trägt zur im wesentlichen rückstandsfreien Wiederablösbarkeit der erfindungsgemäßen Selbstklebefolie vom Fußboden bzw. von der Treppe und/oder vom Fußbodenbelag bei.

Zur Erzielung einer besonders zuverlässigen und haltbaren Verklebung des Fußbodenbelags mittels der erfindungsgemäßen Selbstklebefolie bei gleichzeitig rückstandsfreier Wiederablösbarkeit vom Fußboden ist es des weiteren bevorzugt, daß die untere Oberfläche eine Haftkleberbeschichtung mit geringerer Haftstärke als die Haftstärke der Haftkleberbeschichtung an der oberen Oberfläche aufweist. Es können dazu auf jeder der beiden Oberflächen unterschiedliche Haftkleber oder auf jeder der Oberflächen jeweils der gleiche Haftkleber Verwendung finden.

In einer bevorzugten Ausführungsform der Erfindung wird die unterschiedliche Haftstärke bzw. Klebekraft der beiden Oberflächen der Haftkleberbeschichtung durch unterschiedliche Kleberauftragsgewichte bewirkt, wobei die Oberfläche mit der größeren Haftstärke ein höheres Kleberauftragsgewicht aufweist.

Besonders bevorzugt ist eine Ausführungsform, bei welcher das Kleberauftragsgewicht zumindest auf der oberen Oberfläche im Bereich von 5 bis 250 g/m² und insbesondere zumindest auf der unteren Oberfläche im Bereich von 5 bis 40 g/m², insbesondere von 8 bis 20 g/m², liegt.

Als Haftkleber haben sich eine auf Acrylat basierende Dispersion, z.B. angereichert mit Harzen und mit darin enthaltenem UV- und Alterungsschutz bewährt, wobei auch jeder andere geeignete Haftkleber auf Dispersionsbasis verwendbar ist, welcher insbesondere auch für Wasserdampf diffusionsfähig sein kann. Bevorzugt ist die Haftkleberbeschichtung vollflächig, sie kann jedoch auch abschnittsweise aufgebracht sein.

Geeigneterweise wählt man Haftkleber aus, welche gegen den Fußbodenbelag wie auch gegen den Fußboden eine möglichst konstante Klebkraft über einen gewissen Zeitraum aufweisen.

Geeignete Haftkleber zumindest für die Haftkleberbeschichtung der oberen Oberfläche können weichmacherbeständige Haftkleber sein.

Geeignete wiederablösbare Haftkleber zumindest für die untere Oberfläche haben ein G'/G"-Verhältnis von ≥ 1. Dabei liegt G' bevorzugt im Bereich von 8000 Pa bis 150000 Pa und G" liegt bevorzugt im Bereich von 4000 Pa bis 30000 Pa.

Durch geeignete Auswahl der verwendeten Haftkleberbeschichtung bzw. der verwendeten Haftkleber zusammen mit der Trägerschicht wird gemäß der Erfindung sichergestellt, daß zu jedem Zeitpunkt eine rückstandsfreie Wiederablösbarkeit der erfindungsgemäßen Selbstklebefolie zumindest vom Fußboden aber u.U. auch vom Fußbodenbelag gegeben ist.

Da jeweils Haftkleber mit unterschiedlichen Klebekräften auf den Oberflächen aufgebracht werden können, ist nicht allein das Kleberauftragsgewicht für eventuell unterschiedliche Haftstärken verantwortlich, sondern auch die eventuell unterschiedlichen Klebekräfte der verwendeten Haftkleber.

Als allgemein gültiges Meßverfahren für die Haftstärke bzw. Klebekraft einer Haftkleberbeschichtung dient die Messung der Schälkraft nach DIN1939. Dabei wird die Kraft gemessen, die zum Abziehen der Selbstklebefolie, welche mit der zu untersuchenden Haftkleberbeschichtung einer bestimmten Klebekraft und eines bestimmten Auftragsgewichtes versehen ist, benötigt wird. Dabei beträgt nach der Prüfnorm die Breite der Selbstklebefolie 25 mm, und als Klebepartner der Selbstklebefolie dient eine Stahloberfläche.

Bevorzugt liegt die nach DIN1939 gemessene Schälkraft der Haftkleberbeschichtung zumindest der unteren Oberfläche in einem Bereich von 0,5 bis 5 N. Bevorzugter ist ein Bereich von 1,5 bis 3 N und am meisten bevorzugt ist ein Kraftbereich von 2,0 bis 2,6 N.

Wie schon angesprochen, können auf jeder der beiden Oberflächen unterschiedliche Haftkleber z.B. mit unterschiedlichen Klebekräften oder auf jeder Oberfläche jeweils der gleiche Haftkleber Verwendung finden.

In der erfindungsgemäßen Ausführungsform sind die Trägerschicht und die Haftkleberbeschichtung der Selbstklebefolie wasserdampfdurchlässig ausgebildet, wobei der s_{d}-Wert in einem Bereich von 0,2 m bis 15 m, besonders bevorzugt in einem Bereich von 0,5 bis 7 m liegt. Der s_{d}-Wert gibt die Wasserdampfdiffusionsäquivalente Luftschichtdicke in der Einheit [m] an. Dabei wird der s_{d}-Wert der Wasserdampfdurchlässigkeit nach ASTM E 398, Methode Dr. Lyssy bestimmt.

Durch die bevorzugte wasserdampfdurchlässige Ausbildung der erfindungsgemäßen Selbstklebefolie ist es möglich ist, daß eventuell vom Fußboden aufsteigende Restfeuchtigkeit, d.h. Wasserdampf, insbesondere bei frisch verlegtem Parkett oder bei der Verlegung von Fußbodenbelägen auf frisch aufgebrachtem Zementestrich, welcher unter Umständen nicht vollständig ausgetrocknet ist, sich nicht zwischen dem Fußboden und der Trägerschicht der erfindungsgemäßen Selbstklebefolie ansammelt und somit die Klebeeigenschaften der verwendeten Haftkleberbeschichtung negativ beeinflußt. Insbesondere kann das Nachlassen der Klebkraft sowie eine eventuell verschlechterte Wiederablösbarkeit vermieden werden. Auch kann es aufgrund einer entsprechenden Gestaltung der Selbstklebefolie bei Verkleben eines Fußbodenbelags nicht zur Bildung von Schimmel oder Aufweichungen des eventuell verlegten Parketts aufgrund von angesammeltem Wasserdampf kommen.

Es kann vorteilhaft sein, die Wasserdampfdurchlässigkeit der Trägerschicht und der Haftkleberbeschichtung durch Perforieren der Trägerschicht und/oder Perforieren der Haftkleberbeschichtung zumindest einer der Oberflächen zu erreichen. Somit kann auf einfache Weise eine Wasserdampfdurchlässigkeit der Selbstklebefolie erreicht werden. Das Perforieren gemäß der Erfindung ist dabei nicht so zu verstehen, daß die Selbstklebefolie lediglich abschnittsweise vorkonfektioniert ist und vorgegebene Abschnitte der Selbstklebefolie entlang entsprechend verlaufender Perforationslöcher von Hand von der übrigen Selbstklebefolie abtrennbar sind.

Besonders bevorzugt ist es, die Trägerschicht und/oder die Haftkleberbeschichtung zumindest einer der Oberflächen über die gesamte Fläche verteilt mit Perforationslöchern zu versehen. Somit ist, insbesondere bei großflächiger Verwendung der erfindungsgemäßen Selbstklebefolie eine bestmögliche Wasserdampfdurchlässigkeit gegeben.

Besonders vorteilhaft ist es, falls die Perforationslöcher in der Trägerschicht und in der Haftkleberbeschichtung zumindest einer der Oberflächen miteinander fluchtend angeordnet sind, so daß ein direkter Durchlaß eventuell aufsteigenden Wasserdampfs aus dem Fußboden möglich ist.

Bevorzugt weisen die Perforationslöcher einen Abstand voneinander von vorzugsweise weniger als 10 cm auf, wobei die Löcher eine Querschnittsfläche von vorzugsweise weniger als 4 mm² aufweisen.

Selbstverständlich ist es im Rahmen der Erfindung möglich, beispielsweise eine perforierte Trägerschicht mit einer zumindest an einer Oberfläche perforierten Haftkleberbeschichtung und einer unperforierten diffusionsfähigen Haftkleberbeschichtung auf der jeweils anderen Oberfläche zu kombinieren. So kann die Trägerschicht beispielsweise nur an der oberen oder an der unteren Oberfläche mit einer perforierten Haftkleberbeschichtung versehen sein und an der jeweils anderen Oberfläche eine unperforierte diffusionsfähige Haftkleberbeschichtung aufweisen, die Trägerschicht (perforiert oder nicht) kann aber auch sowohl an ihrer oberen als auch an ihrer unteren Oberfläche mit einer unperforierten oder einer perforierten Haftkleberbeschichtung versehen sein, wobei im Fall einer Perforation die jeweiligen Perforationslöcher miteinander fluchtend angeordnet sein können. Bevorzugt kann die Haftkleberbeschichtung zumindest einer der Oberflächen aus für Wasserdampf diffusionsfähigem Haftkleber bestehen, wobei auch beide Oberflächen eine Haftkleberbeschichtung aufweisen können, ob perforiert oder nicht, welche aus für Wasserdampf diffusionsfähigem Haftkleber besteht.

Wie bereits ausgeführt ist es vorteilhaft, daß die Trägerschicht zumindest an ihrer unteren Oberfläche im wesentlichen eben ausgebildet ist. Ferner ist es vorteilhaft, falls die Haftkleberbeschichtung zumindest der unteren Oberfläche im wesentlichen eben ausgebildet ist. So können gemäß einer vorteilhaften Ausführungsform der Erfindung im Fall vorhandener Perforierung die Trägerschicht und/oder die Haftkleberbeschichtung zumindest der unteren Oberfläche zumindest zwischen den Perforationslöchern eben ausgebildet sein, was durch den Ausdruck "im wesentlichen eben" mit ausgedrückt sein soll.

Die Herstellung der besonders bevorzugten Ausführungsform der Selbstklebefolie erfolgt derart, daß die Perforationslöcher von unten, d.h. von der Seite der unteren, dem Fußboden zugewandten Oberfläche her, in die Selbstklebefolie eingestochen werden.

Auf diese Weise wird sichergestellt, daß die erfindungsgemäße Selbstklebefolie zumindest an der unteren Oberfläche der Trägerschicht bzw. daß die Haftkleberbeschichtung zumindest der unteren Oberfläche im wesentlichen eben ausgebildet ist, da die Grate der Perforationslöcher der Trägerschicht aufgrund der Einstichsrichtung nach oben von der unteren Oberfläche weg gerichtet sind. Ferner ebnet die Haftkleberbeschichtung zumindest der unteren Oberfläche diese im wesentlichen aus.

Zumindest an der oberen, dem Fußbodenbelag zugewandten Oberfläche weist die erfindungsgemäße Selbstklebefolie in einer bevorzugten Ausführungsform ein Gewebe/Gelege bzw. eine textile Struktur auf, das insbesondere zum Erhalt der Dimensionsstabilität der Selbstklebefolie beim Verlegen und beim Ablösen dient. Das Gewebe kann auch an der unteren, dem Fußboden zugewandten Oberfläche oder an beiden Oberflächen angeordnet sein. Das Gewebe wird durch Fäden aus geeignetem reißfestem Material gebildet.

Die Anordnung kann dabei jede im wesentlichen grobmaschige Gestaltung annehmen, insbesondere sind rechteckig zueinander angeordnete und in der jeweiligen Richtung parallel liegende Fäden bevorzugt. Die Fäden können in dem jeweiligen Richtungen parallel zu den Seitenkanten der Selbstklebefolie ausgerichtet sein, oder aber einen beliebigen Winkel dazu bilden.

Besonders bevorzugt ist eine Ausführungsform, bei welcher die textile Struktur parallellaufende Fäden in einer grobmaschigen Anordnung sowie in stumpfem Winkel dazu rautenförmig angeordnete Fäden aufweist.

Besonders bevorzugt beträgt der jeweilige Fadenabstand der textilen Struktur zwischen 3 und 30 mm.

Es kann sich bei der textilen Struktur um ein Fadengelege, aber auch um eine netzartig versponnene Struktur, bei der die Fäden aus feinen, miteinander versponnenen Einzelfäden bestehen, handeln. Dabei befinden sich die Fäden der textilen Struktur auf zumindest der oberen Oberfläche der Trägerschicht und sind in die Haftkleberbeschichtung eingebettet und von dieser im wesentlichen umschlossen, so daß auch die entsprechende Oberfläche der Selbstklebefolie im wesentlichen eben ausgebildet ist. Die grobmaschige textile Struktur sorgt für die Dimensionsstabilität der Selbstklebefolie, wobei die im wesentlichen ebene Ausbildung der entsprechenden Oberfläche auch im wesentlichen erhalten bleibt. Dies erleichtert das sichere Ablösen, da somit die Selbstklebefolie beim Ablösen formstabil bleibt.

Durch die besonders bevorzugte parallele sowie rautenförmige Anordnung der Fäden ergibt sich eine zusätzliche Dimensionsstabilität in schräger Richtung, d.h. in Richtung der rautenförmig angeordneten Fäden. Diese zusätzliche Stabilität ist besonders bei schrägem (in Bezug auf die parallel zu den Rändern angeordneten Fäden) Abziehen der Selbstklebefolie von Vorteil und bietet zusätzliche Sicherheit für das rückstandsfreie Ablösen der Selbstklebefolie.

Zur Verbesserung der Handhabbarkeit der erfindungsgemäßen Selbstklebefolie weist diese zumindest an der oberen Oberfläche auf ihrer Haftkleberbeschichtung einen entfernbaren Abdeckfilm auf. Dieser kann beispielsweise aus Silikonpapier oder anderem geeignetem Material bestehen.

Es kann auch zusätzlich oder lediglich auf der unteren Oberfläche ein entfembarer Abdeckfilm vorhanden sein. Im Falle, daß die Haftstärke der unteren Oberfläche im Vergleich zur Haftstärke der oberen Oberfläche geringer ist, ist dies jedoch nicht unbedingt erforderlich.

Der Abdeckfilm liegt lösbar haftend praktisch lückenlos an der entsprechenden Oberfläche an.

Zum Transport kann die Selbstklebefolie in Rollenform vorliegen. Die Selbstklebefolie kann dazu zu einer Rolle gewickelt sein. Generell kann dann die Selbstklebefolie in gewünschter Länge von der Bahnlänge der Rolle abgewickelt werden. Die Selbstklebefolie kann mit bestimmter Breite und auch in bestimmten Längen und/oder Formen vorkonfektioniert sein.

Zur Erzielung bestmöglicher Verklebeergebnisse ist es besonders vorteilhaft, die Selbstklebefolie so auszubilden, daß sie zum großflächigen Abdecken des mit dem Fußbodenblag zu belegenden Fußbodens bzw. der Treppe ausgebildet ist.

Besonders bevorzugt ist es dabei, die Breite der Selbstklebefolie so zu wählen, daß sie in einem Bereich von 150 mm bis 2.000 mm liegt, insbesondere in einem Bereich von 500 mm bis 1.500 mm, und insbesondere in einem Bereich von 600 mm bis 1.000 mm. Bei Verwendung für Treppen ist es besonders bevorzugt, die Breite der Selbstklebefolie mit 240 mm zu wählen, während bei Verwendung auf Fußböden die Breite der Selbstklebefolie vorzugsweise mindestens 350 mm beträgt.

Als Breite wird dabei die Breite definiert, welche im Fall der zu einer Rolle gewickelten Selbstklebefolie als Abwickelbreite der Rolle (Rollenbreite) vorliegt.

Durch die geeignete Wahl der Breite der Selbstklebefolie ist es insbesondere möglich, eine großflächige Abdeckung des zu verklebenden Fußbodens mit der Selbstklebefolie zu erreichen, und somit eine besonders einfache und sichere Verklebung zu ermöglichen. Die bevorzugte Breite von 240 mm zur Verwendung der Selbstklebefolie im Bereich von Treppen ist so gewählt, daß die Selbstklebefolie sowohl die Trittstufe als auch die Setzstufe einer Stufe mit Normmaßen in zwei Stücken großflächig bzw. vollflächig abdecken kann. Jeweils ein auf geeignete Maße zugeschnittenes Stück der Selbstklebefolie kann somit auf der Trittstufe und an der Setzstufe angebracht werden, wobei sich ihre jeweiligen Kanten im Bereich der Stufenkante treffen oder leicht überlappen und somit eine lückenlose Haftfläche bilden. Wird eine Selbstklebefolie mit geringerer Breite gewählt, kann auch dann eine großflächige bzw. vollflächige Verlegung der Selbstklebefolie erreicht werden. Es ist jedoch in einem solchen Fall mehr als jeweils ein auf geeignete Maße zugeschnittenes Stück der Selbstklebefolie notwendig. Vielmehr können dann mehr als zwei Stücke auf geeignete Maße zugeschnitten werden und beispielsweise auch über die Stufenkante geschlagen werden.

Die Verwendung der erfindungsgemäßen Selbstklebefolie beim Verkleben eines Fußbodenbelages erfolgt bevorzugt auf folgende Weise:

Der gesamte Fußboden wird mit der Selbstklebefolie möglichst lückenlos bedeckt. Dabei richtet man die untere Oberfläche, welche vorzugsweise die geringere Haftstärke aufweist, in Richtung Fußboden. Die obere Oberfläche ist dabei bevorzugt mit dem Abdeckfilm bedeckt. Dann wird der Fußbodenbelag provisorisch aufgelegt und gegebenenfalls zugeschnitten. Anschließend wird ein Teil des Fußbodenbelags wieder zurückgeschlagen, und der Abdeckfilm auf diesem Teil der Selbstklebefolie entfernt. Der zurückgeschlagene Teil des Fußbodenbelags wird wieder auf die obere Oberfläche, welche bevorzugt die größere Haftstärke aufweist, geklappt und gegebenenfalls angepreßt. Mit den übrigen Teilen des Fußbodenbelags wird auf gleiche Weise verfahren, bis der gesamte Fußbodenbelag großflächig am Fußboden verklebt ist.

Zum bevorzugten rückstandsfreien Wiederablösen des Fußbodenbelags vom Fußboden muß dieser lediglich nach oben vom Fußboden abgezogen werden. Dabei trennt sich die Selbstklebefolie von Fußboden und bleibt vorzugsweise am Fußbodenbelag haften. Dabei verbleibt die Haftkleberbeschichtung der unteren Oberfläche an der Trägerschicht. Es ist zusätzlich auch möglich, die erfindungsgemäße Selbstklebefolie so zu gestalten, daß sich die Selbstklebefolie in der Art vom Fußbodenbelag ablösen läßt, daß die Haftkleberbeschichtung der oberen Oberfläche an der Trägerschicht verbleibt. Somit kann der Fußbodenbelag, beispielsweise bei Anwendung in Messen, wiederverwendet werden, ohne daß seine Handhabbarkeit durch eventuelle Kleberrückstände an seiner Unterseite eingeschränkt ist.

Als Material für die Trägerschicht wird Kunststoffolie verwendet. Insbesondere kann es sich dabei um Polypropylen- oder Polyethylen-Folie handeln. Sollte die Trägerschicht vorzugsweise für Wasserdampf diffusionsfähig ausgeführt sein, kann die Kunststoffolien-Trägerschicht beispielsweise aus einer Polyamid-Kunststoffolie bestehen.

Um eine gute Handhabbarkeit der erfindungsgemäßen Selbstklebefolie besonders auch dann vorzusehen, wenn sie perforiert ist, weist die Trägerschicht eine Dicke im Bereich von 10 bis 100 µm, bevorzugt eine Dicke im Bereich von 25 bis 75 µm, und besonders bevorzugt eine Dicke im Bereich von 50 bis 70 µm auf.

## Patentansprüche

1. Selbstklebefolie, zum Verkleben eines Fußbodenbelags mit einem Eigengewicht von über 500 g/m², insbesondere eines Teppichbodens, auf einem Fußboden, insbesondere Parkett, bzw. auf einer Treppe, mit einer Trägerschicht aus Kunststofffolie, welche an einer oberen, dem Fußbodenbelag zugewandten Oberfläche und an einer unteren, dem Fußboden bzw. der Treppe zugewandten Oberfläche mit einer Haftkleberbeschichtung beschichtet ist, und mit einer Mindestbreite von 150 mm zum großflächigen Abdecken des mit dem Fußbodenbelag zu belegenden Fußbodens bzw. der Treppe ausgebildet ist, wobei die Trägerschicht zumindest an ihrer unteren Oberfläche derart haftkleberverankernd ausgebildet ist, dass beim Ablösen der Selbstklebefolie die Haftkleberbeschichtung der unteren Oberfläche an der Trägerschicht verbleibt, und wobei die Trägerschicht und die Haftkleberbeschichtung wasserdampfdurchlässig, ausgebildet sind mit einem sd-Wert nach ASTM E 398, Methode Dr. Lyssy in einem Bereich von 0,2 m bis 15 m.

2. Selbstklebefolie nach Anspruch 1, **dadurch gekennzeichnet, dass** die Trägerschicht und die Haftkleberbeschichtung wasserdampfdurchlässig, ausgebildet sind mit einem sd-Wert nach ASTM E 398, Methode Dr. Lyssy in einem Bereich von 0,5 m bis 7 m

3. Selbstklebefolie nach Anspruch 1 oder 2, **dadurch gekennzeichnet, dass** die Trägerschicht und/oder die Haftkleberbeschichtung zumindest einer Oberfläche perforiert ist bzw. sind, mit Perforationslöchern, welche über die ganze Fläche in einem Abstand voneinander von bevorzugt weniger als 10 cm verteilt sind und eine Querschnittsfläche von weniger als 4 mm² aufweisen.

4. Selbstklebefolie nach Anspruch 3, **dadurch gekennzeichnet, dass** die Perforationslöcher in der Trägerschicht und der Haftkleberbeschichtung zumindest einer der Oberflächen fluchtend angeordnet sind.

5. Selbstklebefolie nach einem der Ansprüche 1 bis 4, **dadurch gekennzeichnet, dass** beim Ablösen der Selbstklebefolie die Haftkleberbeschichtung der oberen Oberfläche an der Trägerschicht verbleibt.

6. Selbstklebefolie nach einem der Ansprüche 1 bis 5, **dadurch gekennzeichnet, dass** die Trägerschicht zumindest an ihrer unteren Oberfläche koronisiert ist.

7. Selbstklebefolie nach einem der Ansprüche 1 bis 6, **dadurch gekennzeichnet, dass** die Trägerschicht zumindest an ihrer unteren Oberfläche mit einer Primerbeschichtung versehen ist.

8. Selbstklebefolie nach einem der Ansprüche 1 bis 7, **dadurch gekennzeichnet, dass** die Trägerschicht zumindest an ihrer unteren Oberfläche mitextrudierten Haftvermittler aufweist.

9. Selbstklebefolie nach einem der Ansprüche 1 bis 8, **dadurch gekennzeichnet, dass** die haftkleberverankernde Oberfläche als Schicht ausgebildet ist.

10. Selbstklebefolie nach einem der Ansprüche 1 bis 9, **dadurch gekennzeichnet, dass** die Trägerschicht aus haftkleberverankerndem Material besteht.

11. Selbstklebefolie nach einem der Ansprüche 1 bis 10, **dadurch gekennzeichnet, dass** die Trägerschicht zumindest einen Abschnitt als Bremsschicht gegen den Durchgang von Additiven und/oder Weichmachern aufweist.

12. Selbstklebefolie nach Anspruch 11, **dadurch gekennzeichnet, dass** die Bremsschicht im wesentlichen die haftkleberverankernde Oberfläche ist.

13. Selbstklebefolie nach einem der Ansprüche 1 bis 12, **dadurch gekennzeichnet, dass** die Trägerschicht zumindest an ihrer unteren Oberfläche im wesentlichen eben ausgebildet ist.

14. Selbstklebefolie nach einem der Ansprüche 1 bis 13, **dadurch gekennzeichnet, dass** zumindest die Haftkleberbeschichtung der unteren Oberfläche im wesentlichen eben ausgebildet ist.

15. Selbstklebefolie nach einem der Ansprüche 1 bis 14, **dadurch gekennzeichnet, dass** die untere Oberfläche eine Haftkleberbeschichtung mit geringerer Haftstärke als die Haftstärke der Haftkleberbeschichtung an der oberen Oberfläche aufweist.

16. Selbstklebefolie nach Anspruch 15, **dadurch gekennzeichnet, dass** unterschiedliche Kleberauftragsgewichte an beiden Oberflächen zur Erzielung unterschiedlicher Haftstärken vorgesehen sind, wobei die Oberfläche mit der größeren Haftstärke ein höheres Kleberauftragsgewicht aufweist.

17. Selbstklebefolie nach Anspruch 16, **dadurch gekennzeichnet, dass** das Kleberauftragsgewicht zumindest auf der oberen Oberfläche im Bereich von 5 bis 250 g/m² und insbesondere zumindest auf der unteren Oberfläche im Bereich von 5 bis 40 g/m², insbesondere von 8 bis 20 g/m² liegt.

18. Selbstklebefolie nach einem der Ansprüche 1 bis 17, **dadurch gekennzeichnet, dass** zumindest die Haftkleberbeschichtung an der oberen Oberfläche aus weichmacherbeständigem Haftkleber besteht.

19. Selbstklebefolie nach einem der Ansprüche 1 bis 18, **dadurch gekennzeichnet, dass** zumindest die Haftkleberbeschichtung an der unteren Oberfläche aus Haftkleber mit einem G'/G"-Verhältnis ≥ 1 besteht.

20. Selbstklebefolie nach einem der Ansprüche 1 bis 19, **dadurch gekennzeichnet, dass** die Haftkleberbeschichtung aus jeweils unterschiedlichen Haftklebern auf der oberen bzw. der unteren Oberfläche besteht.

21. Selbstklebefolie nach einem der Ansprüche 1 bis 20, **dadurch gekennzeichnet, dass** die Haftstärke zumindest der unteren Oberfläche eine Klebekraft (gemessen als Schälkraft nach DIN 1939) in der Größenordnung von 0,5 bis 5 N, insbesondere von 1,5 bis 3 N und insbesondere von 2,0 bis 2,6 N aufweist.

22. Selbstklebefolie nach einem der Ansprüche 1 bis 21, **dadurch gekennzeichnet, dass** die Selbstklebefolie zumindest auf der oberen Oberfläche eine textile Struktur aufweist.

23. Selbstklebefolie nach Anspruch 22, **dadurch gekennzeichnet, dass** die textile Struktur Fäden in einer grobmaschigen Anordnung aufweist.

24. Selbstklebefolie nach Anspruch 23, **dadurch gekennzeichnet, dass** die textile Struktur parallellaufende Fäden in einer grobmaschigen Anordnung sowie im stumpfen Winkel dazu rautenförmig angeordnete Fäden aufweist.

25. Selbstklebefolie nach einem der Ansprüche 22 bis 24, **dadurch gekennzeichnet, dass** die textile Struktur Fäden in einem Fadenabstand von 3 bis 30 mm aufweist.

26. Selbstklebefolie nach einem der Ansprüche 1 bis 25, **dadurch gekennzeichnet, dass** ein entfernbarer Abdeckfilm auf zumindest der oberen Oberfläche vorhanden ist.

27. Selbstklebefolie nach einem der Ansprüche 1 bis 26, **dadurch gekennzeichnet, dass** ihre Breite in einem Bereich von 150 mm bis 2000 mm liegt, insbesondere in einem Bereich von 500 mm bis 1500 mm, und insbesondere in einem Bereich von 600 mm bis 1000 mm liegt, wobei ihre Breite bei Verwendung für Treppen insbesondere 240 mm, und bei Verwendung auf Fußböden mindestens 350 mm beträgt.

28. Selbstklebefolie nach einem der Ansprüche 1 bis 27, **dadurch gekennzeichnet, dass** die Trägerschicht eine Dicke in einem Bereich von 10 bis 100 µm, bevorzugt in einem Bereich von 25 bis 75 µm, und besonders bevorzugt in einem Bereich von 50 bis 70 µm aufweist.

29. Selbstklebefolie nach einem der Ansprüche 1 bis 28, **dadurch gekennzeichnet, dass** die Selbstklebefolie zu einer Rolle gewickelt ist.

## Claims

1. Self-adhesive film, for adhering a floor covering, having an inherent weight of more than 500 g/m², more especially a carpet base, to a floor, more especially a parquet floor, or respectively to a step, said film having a carrier layer formed from plastics material film, which is coated with a contact adhesive coating on an upper surface facing the floor covering and on a lower surface facing the floor or respectively the step, and has a minimum width of 150 mm for the large-area covering of the floor, which is to be covered with the floor covering, or respectively of the step, the carrier layer, at least on its lower surface, being adapted to anchor the contact adhesive in such a manner that, during the detachment of the self-adhesive film, the contact adhesive coating of the lower surface remains on the carrier layer, and the carrier layer and the contact adhesive coating being permeable to water vapour with an sd value, in accordance with ASTM E 398, Dr. Lyssy's method, within a range of between 0.2 m and 15 m.

2. Self-adhesive film according to claim 1, **characterised in that** the carrier layer and the contact adhesive coating are permeable to water vapour with an sd value, in accordance with ASTM E 398, Dr. Lyssy's method, within a range of between 0.5 m and 7 m.

3. Self-adhesive film according to claim 1 or 2, **characterised in that** the carrier layer and/or the contact adhesive coating are or is perforated, at least on one surface, with perforation holes, which are distributed over the whole area at a spacing from one another of preferably less than 10 cm and have an area of cross-section of less than 4 mm².

4. Self-adhesive film according to claim 3, **characterised in that** the perforation holes in the carrier layer and in the contact adhesive coating of at least one of the surfaces are disposed so as to be in alignment with one another.

5. Self-adhesive film according to one of claims 1 to 4, **characterised in that**, during the detachment of the self-adhesive film, the contact adhesive coating of the upper surface remains on the carrier layer.

6. Self-adhesive film according to one of claims 1 to 5, **characterised in that** the carrier layer is subjected to a corona discharge treatment at least on its lower surface.

7. Self-adhesive film according to one of claims 1 to 6, **characterised in that** the carrier layer is provided with a coating of primer at least on its lower surface.

8. Self-adhesive film according to one of claims 1 to 7, **characterised in that** the carrier layer has a co-extruded bonding agent at least on its lower surface.

9. Self-adhesive film according to one of claims 1 to 8, **characterised in that** the contact adhesive anchoring surface is in the form of a layer.

10. Self-adhesive film according to one of claims 1 to 9, **characterised in that** the carrier layer is formed from contact adhesive anchoring material.

11. Self-adhesive film according to one of claims 1 to 10, **characterised in that** the carrier layer has at least one portion in the form of a retarding layer to prevent additives and/or plasticisers from passing therethrough.

12. Self-adhesive film according to claim 11, **characterised in that** the retarding layer is substantially the contact adhesive anchoring surface.

13. Self-adhesive film according to one of claims 1 to 12, **characterised in that** the carrier layer is substantially flat at least on its lower surface.

14. Self-adhesive film according to one of claims 1 to 13, **characterised in that** at least the contact adhesive coating of the lower surface is substantially flat.

15. Self-adhesive film according to one of claims 1 to 14, **characterised in that** the lower surface has a contact adhesive coating with a lower adhesive strength than the adhesive strength of the contact adhesive coating on the upper surface.

16. Self-adhesive film according to claim 15, **characterised in that** different adhesive applying weights are provided on the two surfaces to achieve different adhesive strengths, the surface with the greater adhesive strength having a greater adhesive applying weight.

17. Self-adhesive film according to claim 16, **characterised in that** the adhesive applying weight, at least on the upper surface, lies within the range of between 5 and 250 g/m², and more especially, at least on the lower surface, within the range of between 5 and 40 g/m², most especially between 8 and 20 g/m².

18. Self-adhesive film according to one of claims 1 to 17, **characterised in that** at least the contact adhesive coating on the upper surface is formed from a plasticiser-resistant contact adhesive.

19. Self-adhesive film according to one of claims 1 to 18, **characterised in that** at least the contact adhesive coating on the lower surface is formed from a contact adhesive having a G'/G" ratio ≥ 1.

20. Self-adhesive film according to one of claims 1 to 19, **characterised in that** the contact adhesive coating is formed from respectively different contact adhesives on the upper and lower surfaces respectively.

21. Self-adhesive film according to one of claims 1 to 20, **characterised in that** the adhesive strength, at least of the lower surface, has an adhesive force (measured as peel force in accordance with DIN 1939) in the order of magnitude of between 0.5 and 5 N, more especially between 1.5 and 3 N, and most especially between 2.0 and 2.6 N.

22. Self-adhesive film according to one of claims 1 to 21, **characterised in that** the self-adhesive film has a textile structure at least on the upper surface.

23. Self-adhesive film according to claim 22, **characterised in that** the textile structure has filaments in a wide-meshed disposition.

24. Self-adhesive film according to claim 23, **characterised in that** the textile structure has parallel-extending filaments in a wide-meshed disposition as well as filaments disposed in a rhombic manner at an obtuse angle thereto.

25. Self-adhesive film according to one of claims 22 to 24, **characterised in that** the textile structure has filaments with a spacing between filaments of between 3 and 30 mm.

26. Self-adhesive film according to one of claims 1 to 25, **characterised in that** a removable cover film is present on at least the upper surface.

27. Self-adhesive film according to one of claims 1 to 26, **characterised in that** its width lies within a range of between 150 mm and 2000 mm, more especially within a range of between 500 mm and 1500 mm, and most especially within a range of between 600 mm and 1000 mm, its width being more especially 240 mm when used for steps, and being at least 350 mm when used on floors.

28. Self-adhesive film according to one of claims 1 to 27, **characterised in that** the carrier layer has a thickness within a range of between 10 and 100 µm, preferably within a range of between 25 and 75 µm, and particularly preferably within a range of between 50 and 70 µm.

29. Self-adhesive film according to one of claims 1 to 28, **characterised in that** the self-adhesive film is wound to form a roll.

## Revendications

1. Film autoadhésif pour le collage d'un revêtement de sol d'un poids propre supérieur à 500 g/m², en particulier d'une moquette, sur un sol, en particulier en parquet, respectivement sur un escalier, comprenant une couche porteuse constituée d'un film plastique revêtu d'une couche d'adhésif de contact sur une face supérieure tournée vers le revêtement de sol et sur une face inférieure tournée vers le sol, respectivement vers l'escalier, et possédant une largeur minimale de 150 mm pour recouvrir sur une grande surface le sol, respectivement l'escalier à recouvrir du revêtement de sol, la couche porteuse étant conçue, au moins sur sa face inférieure, avec une accroche par adhésif de contact telle que, lors du décollement du film autoadhésif, la couche d'adhésif de contact de la face inférieure reste sur la couche porteuse, et la couche porteuse et la couche d'adhésif de contact étant perméables à la vapeur d'eau, avec une valeur s_{D} selon ASTM E 398, méthode du Dr Lyssy, située dans une plage de 0,2 m à 15 m.

2. Film autoadhésif selon la revendication 1, **caractérisé en ce que** la couche porteuse et la couche d'adhésif de contact sont perméables à la vapeur d'eau avec une valeur s_{D}, selon ASTM E 398, méthode du Dr Lyssy, située dans une plage de 0,5 m à 7 m.

3. Film autoadhésif selon la revendication 1 ou 2, **caractérisé en ce que** la couche porteuse et/ou la couche d'adhésif de contact d'au moins l'une des faces est, respectivement sont perforées par des trous de perforation qui sont distribués sur l'ensemble de leur surface à une distance les uns des autres de préférence inférieure à 10 cm et qui présentent une aire de section inférieure à 4 mm².

4. Film autoadhésif selon la revendication 3, **caractérisé en ce que** les trous de perforation dans la couche porteuse et dans la couche d'adhésif de contact d'au moins l'une des faces sont alignés les uns avec les autres.

5. Film autoadhésif selon une des revendications 1 à 4, **caractérisé en ce que**, lors du décollement du film autoadhésif, la couche d'adhésif de contact de la face supérieure reste sur la couche porteuse.

6. Film autoadhésif selon une des revendications 1 à 5, **caractérisé en ce que** la couche porteuse est traitée par effet corona au moins sur sa face inférieure.

7. Film autoadhésif selon une des revendications 1 à 6, **caractérisé en ce que** la couche porteuse est pourvue d'une couche primaire au moins sur sa face inférieure.

8. Film autoadhésif selon une des revendications 1 à 7, **caractérisé en ce que** la couche porteuse comporte des promoteurs d'adhérence coextrudés au moins sur sa face inférieure.

9. Film autoadhésif selon une des revendications 1 à 8, **caractérisé en ce que** la face d'accroche par adhésif de contact est conformée en couche.

10. Film autoadhésif selon une des revendications 1 à 9, **caractérisé en ce que** la couche porteuse est réalisée en matière d'accroche par adhésif de contact.

11. Film autoadhésif selon une des revendications 1 à 10, **caractérisé en ce que** la couche porteuse comporte au moins une portion faisant fonction de couche de freinage à la traversée d'additifs et/ou de plastifiants.

12. Film autoadhésif selon la revendication 11, **caractérisé en ce que** la couche de freinage est, pour l'essentiel, la face d'accroche par adhésif de contact.

13. Film autoadhésif selon une des revendications 1 à 12, **caractérisé en ce que** la couche porteuse est conformée de manière essentiellement plane au moins sur sa face inférieure.

14. Film autoadhésif selon une des revendications 1 à 13, **caractérisé en ce qu'**au moins la couche d'adhésif de contact de la face inférieure est conformée de manière essentiellement plane.

15. Film autoadhésif selon une des revendications 1 à 14, **caractérisé en ce que** la face inférieure porte une couche d'adhésif de contact offrant une adhérence inférieure à celle de la couche d'adhésif de contact de la face supérieure.

16. Film autoadhésif selon la revendication 15, **caractérisé en ce que** les poids d'application d'adhésif prévus sur les deux faces sont différents afin d'obtenir des adhérences différentes, la face de plus grande adhérence présentant un poids d'application d'adhésif supérieur.

17. Film autoadhésif selon la revendication 16, **caractérisé en ce que** le poids d'application d'adhésif au moins sur la face supérieure se situe dans une plage de 5 à 250 g/m² et en particulier au moins sur la face inférieure dans une plage de 5 à 40 g/m², en particulier de 8 à 20 g/m².

18. Film autoadhésif selon une des revendications 1 à 17, **caractérisé en ce qu'**au moins la couche d'adhésif de contact sur la face supérieure est réalisée en adhésif de contact résistant aux plastifiants.

19. Film autoadhésif selon une des revendications 1 à 18, **caractérisé en ce qu'**au moins la couche d'adhésif de contact sur la face inférieure est réalisée en adhésif de contact offrant un rapport G'/G" ≥ 1.

20. Film autoadhésif selon une des revendications 1 à 19, **caractérisé en ce que** la couche d'adhésif de contact est réalisée avec des adhésifs de contact différents sur les faces supérieure, respectivement inférieure.

21. Film autoadhésif selon une des revendications 1 à 20, **caractérisé en ce que** l'adhérence d'au moins la face inférieure offre un pouvoir collant (mesuré en tant que force de pelage selon DIN 1939) de l'ordre de 0,5 à 5 N, en particulier de 1,5 à 3 N et, plus particulièrement, de 2,0 à 2,6 N.

22. Film autoadhésif selon une des revendications 1 à 21, **caractérisé en ce que** le film autoadhésif au moins sur la face supérieure présente une structure textile.

23. Film autoadhésif selon la revendication 22, **caractérisé en ce que** la structure textile comporte des fils organisés en grandes mailles.

24. Film autoadhésif selon la revendication 23, **caractérisé en ce que** la structure textile comporte des fils à tracé parallèle organisés en grandes mailles ainsi que des fils disposés à angle aigu par rapport à ceux-ci pour former des losanges.

25. Film autoadhésif selon une des revendications 22 à 24, **caractérisé en ce que** la structure textile comporte des fils présentant un écartement de 3 à 30 mm.

26. Film autoadhésif selon une des revendications 1 à 25, **caractérisé en ce qu'**un film de protection amovible est prévu sur au moins la face supérieure.

27. Film autoadhésif selon une des revendications 1 à 26, **caractérisé en ce que** sa largeur se situe dans une plage de 150 mm à 2 000 mm, en particulier dans une plage de 500 mm à 1 500 mm, et plus particulièrement dans une plage de 600 mm à 1 000 mm, la largeur étant en particulier de 240 mm dans le cas d'une utilisation pour des escaliers et d'au moins 350 mm dans le cas d'une utilisation sur des sols.

28. Film autoadhésif selon une des revendications 1 à 27, **caractérisé en ce que** la couche porteuse présente une épaisseur se situant dans une plage de 10 à 100 µm, respectivement dans une plage de 25 à 75 µm, et de manière particulièrement préférée dans une plage de 50 à 70 µm.

29. Film autoadhésif selon une des revendications 1 à 28, **caractérisé en ce que** le film autoadhésif est enroulé pour former un rouleau.
